Europäisches Patentamt

European Patent Office

Office européen des brevets

(19)

(11) Numéro de publication: **0 236 226**
**B1**

(12) **FASCICULE DE BREVET EUROPEEN**

(45) Date de publication du fascicule du brevet:
**17.10.90**

(51) Int. Cl.⁵: **G01V 1/04**, G10K 11/20

(21) Numéro de dépôt: **87400450.0**

(22) Date de dépôt: **02.03.87**

(54) Structure suspendue pour coupler des sources sismiques aux parois d'un forage.

(30) Priorité: **03.03.86 FR 8602920**

(43) Date de publication de la demande:
**09.09.87 Bulletin 87/37**

(45) Mention de la délivrance du brevet:
**17.10.90 Bulletin 90/42**

(84) Etats contractants désignés:
**DE FR GB IT**

(56) Documents cités:
**FR-A- 1 577 603**
**FR-A- 2 408 964**
**US-A- 3 532 182**
**US-A- 4 039 042**
**US-A- 4 164 727**

(73) Titulaire: **COMPAGNIE GENERALE DE GEOPHYSIQUE,
1, Rue Léon Migaux, F-91341 Massy-Cédex(FR)**

(72) Inventeur: **Omnes, Gildas, 19, Sentier des Cottainvilles,
F-94240 L'Hay-les-Roses(FR)**

(74) Mandataire: **Martin, Jean-Jacques et al, Cabinet
REGIMBEAU 26, Avenue Kléber, F-75116 Paris(FR)**

ACTORUM AG

## Description

La présente invention concerne d'une façon générale les sources sismiques pour la prospection du sous-sol, et concerne en particulier une structure suspendue pour coupler des sources sismiques aux parois d'un forage.

Dans certains procédés de prospection sismique, on dispose une source sismique dans un forage, on excite la source à des profondeurs données pour produire dans les formations souterraines avoisinantes des ondes acoustiques bien déterminées, et on utilise un ensemble de capteurs, soit répartis à la surface du sol, soit disposés dans d'autres forages avoisinants, pour capter, à des fins d'analyse, les informations acoustiques après propagation et réflexion dans les formations géologiques.

Dans la technique antérieure, lors de la mise en oeuvre d'une source sismique dans un forage, aucune précaution particulière n'est prise en association avec la source en ce qui concerne son couplage avec les formations géologiques situées à sa hauteur.

En particulier, quel que soit le type de source employé, la ou les ondes acoustiques développées lors de son excitation s'exercent aussi bien latéralement vers lesdites formations géologiques que vers le haut et vers le bas dans le forage, sous forme d'ondes de compression et/ou d'ondes de tube. Cette énergie acoustique propagée vers le haut et vers le bas entraîne dans les formations géologiques voisines des phénomènes de bruits parasites qui seront répercutés au niveau des capteurs phoniques destinés à fournis les signaux à analyser.

En outre, pour des raisons économiques, il est souhaitable d'optimiser la quantité d'énergie acoustique appliquée aux formations géologiques concernées. Ainsi, du fait qu'une proportion généralement très importante de l'énergie acoustique se propage verticalement dans le forage sans action substantielle sur la formation géologique, il est nécessaire en pratique de répéter l'émission un grand nombre de fois, ce qui est désavantageux.

On connaît déjà dans la technique antérieure, par le brevet US-A 4 039 042, une structure suspendue ayant les caractéristiques exposées dans le préambule de la revendication 1.

Cependant, dans cette structure connue, les éléments obturateurs supérieur et inférieur sont reliés l'un à l'autre par une section de tube dans laquelle sont ménagées des fenêtres acoustiques pour la propagation de l'énergie acoustique engendrée par la source vers les parois du forage. Ainsi la section de tube, en dehors des fenêtres, constitue un obstacle à l'application de l'énergie vers le sous-sol; en outre, la répartition angulaire de l'énergie autour de l'axe de la structure suspendue est de ce fait irrégulière.

L'invention vise à pallier les inconvénients de la technique antérieure et à proposer une structure suspendue dans laquelle l'application latérale de l'énergie sismique vers le sous-sol avoisinant soit optimisée.

Elle propose à cet effet une structure suspendue ayant les caractéristiques exposées dans la revendication 1.

De façon préférée, les éléments obturateurs supérieur et inférieur sont des cylindres métalliques et comprennent des moyens d'absorption de l'énergie acoustique.

De cette manière, les ondes acoustiques émises par la source en direction verticale sont encore atténuées par l'effet d'amortissement des moyens d'absorption, ceux-ci contribuant également à atténuer les ondes de résonance qui peuvent apparaître dans le forage.

L'invention sera mieux comprise à la lecture de la description détaillée suivante de formes de réalisation préférées de celle-ci, donnée à titre d'exemple et faite en référence aux dessins annexés, sur lesquels:

– la figure 1 est une vue en coupe verticale axiale d'une première forme de réalisation de l'invention, et

– la figure 2 est une vue en coupe verticale axiale d'une deuxième forme de réalisation de l'invention.

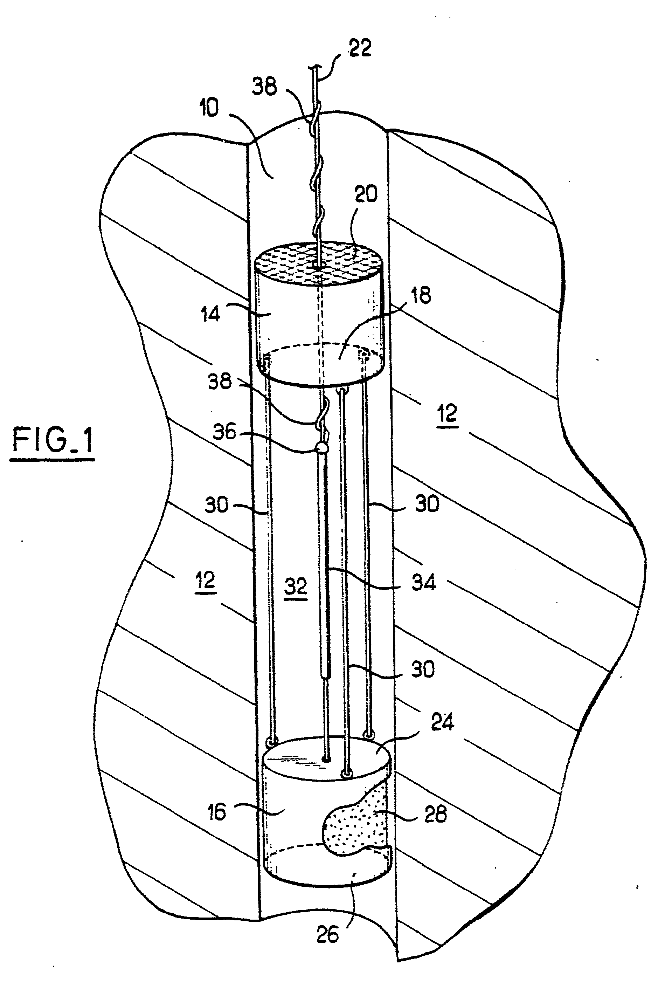

En référence tout d'abord à la figure 1, un forage, destiné à la mise en œuvre à diverses hauteurs d'une source sismique, est désigné par la référence 10, et la formation géologique dans laquelle il est pratiqué est indiquée en 12.

Une structure suspendue selon un premier exemple de réalisation de l'invention comprend, du haut vers le bas, deux éléments ou caissons cylindriques supérieur et inférieur, respectivement indiqués en 14 et 16. Le caisson supérieur 14 est fermé à son extrémité inférieure par une plaque circulaire pleine 18 et à son extrémité supérieure par une plaque ajourée telle qu'une grille ou analogue, également circulaire, indiquée en 20. Le diamètre des cylindres sera choisi de telle sorte qu'ils obturent au maximum le forage à leur hauteur, tout en ne faisant pas obstacle aux manoeuvres verticales de la structure suspendue dans le forage.

L'extrémité inférieure d'un câble de suspension 22 est attachée au cylindre supérieur 14, de préférence au niveau de sa plaque de fermeture inférieure, d'une manière non illustrée.

D'une manière analogue, le cylindre inférieur 16 est fermé à son extrémité supérieure par une plaque circulaire pleine 24, et à son extrémité inférieure par une grille 26 (non visible sur la figure) analogue à la grille 20.

Les deux cylindres 14 et 16 sont remplis d'une mousse de matière plastique, comme indiqué en 28, en association avec le cylindre inférieur.

Des éléments de suspension, dans le présent exemple sous la forme de trois câbles métalliques 30, s'étendent entre l'extrémité inférieure du cylindre supérieur 14 et l'extrémité supérieure du cylindre 16, en étant attachés, de façon régulièrement espacée, à la périphérie de ceux-ci. On ne décrira pas le mode d'accrochage de ces câbles 30 aux cylindres, qui peut être de tout type considéré comme approprié par l'homme de l'art. Le cylindre 16 est ainsi suspendu au cylindre 14, lui-même suspendu au câble 22, pour définir une structure suspendue, destinée à des opérations de tir à l'aide d'une source sismique à des fins de prospection du sous-sol.

Les deux cylindres 14 et 16 sont ainsi séparés verticalement d'une hauteur prédéterminée et obturent le forage pour définir entre eux un espace de travail 32. L'espace est délimité latéralement par les parois du forage 10, et en haut et en bas par les plaques pleines 18 et 24 des cylindres supérieur et inférieur. On peut considérer comme négligeable la présence des câbles entre l'espace 32 et les parois du forage, comme on le verra en détail plus loin.

Un source sismique est susceptible d'être excitée de manière à effectuer son action dans l'espace 32. Dans le présent exemple, la source sismique consiste en un cordeau détonnant 34, constitué conventionnellement par une âme de matériau explosif, de masse linéaire prédéterminée, entourée d'une gaine. Une capsule de mise à feu 36 est prévue à l'extrémité supérieure du cordeau 34 et peut être commandée à un instant déterminé à partir de la surface du sol par l'intermédiaire d'un câble électrique 38 courant le long du câble de suspension 22.

Dans le cas où la structure suspendue de l'invention sera utilisée pour provoquer des secousses sismiques successivement à différentes profondeurs dans le forage, on pourra utiliser avantageusement un mécanisme apte à dérouler le cordeau détonnant à partir d'un rouleau continu. Une longueur de cordeau prédéterminée sera ainsi déroulée après chaque explosion, par une télécommande appropriée depuis la surface, pour pouvoir effectuer une nouvelle excitation. Un tel mécanisme pourra être reçu dans l'un des deux cylindres 14 et 16.

Lorsque la source sismique 34 est excitée, comme décrit ci-dessus, elle crée dans l'espace 32 une onde de choc acoustique tridimensionnelle. Les composantes verticales de cette onde rencontrent les surfaces intérieures (les plaques de fermeture 18 et 24) des cylindres supérieur et inférieur 14 et 16, qui s'opposent par leur inertie, et par l'effet d'absorption de la mousse 28 contenue dans chacun de ceuxci, à la propagation de ces ondes dans l'espace vertical constitué par le forage.

Les grilles 20 et 26 ont pour objet de maintenir les blocs de mousse absorbante 28 en place tout en établissant la communication entre l'espace intérieur de chaque cylindre 14, 16 et le forage à l'extérieur de la cage, afin d'autoriser l'effet d'amortissement acoustique par ladite mousse des ondes de tube qui pourraient apparaître dans ledit forage.

En conséquence, la majeure partie de l'énergie acoustique créée par l'excitation de la source est confinée, relativement uniformément, aux parois latérales de l'espace de travail, c'est-à-dire à la formation géologique avoisinante. On améliore ainsi la directivité de la source sismique, et donc son couplage avec la formation géologique qui l'entoure, en évitant les phénomènes parasites qui pourraient être provoqués par la propagation de l'onde dans la direction longitudinale du forage. On peut noter ici que les câbles de suspension 30, dont les dimensions transversales sont réduites, ne constituent sensiblement aucun obstacle à cette action latérale de la source sismique.

Dans le présent exemple de réalisation, la structure suspendue à cage est réalisée en acier. Les plaques 18 et 24 et les grilles 20 et 26 pourront être fixées aux extrémités des cylindres par soudage.

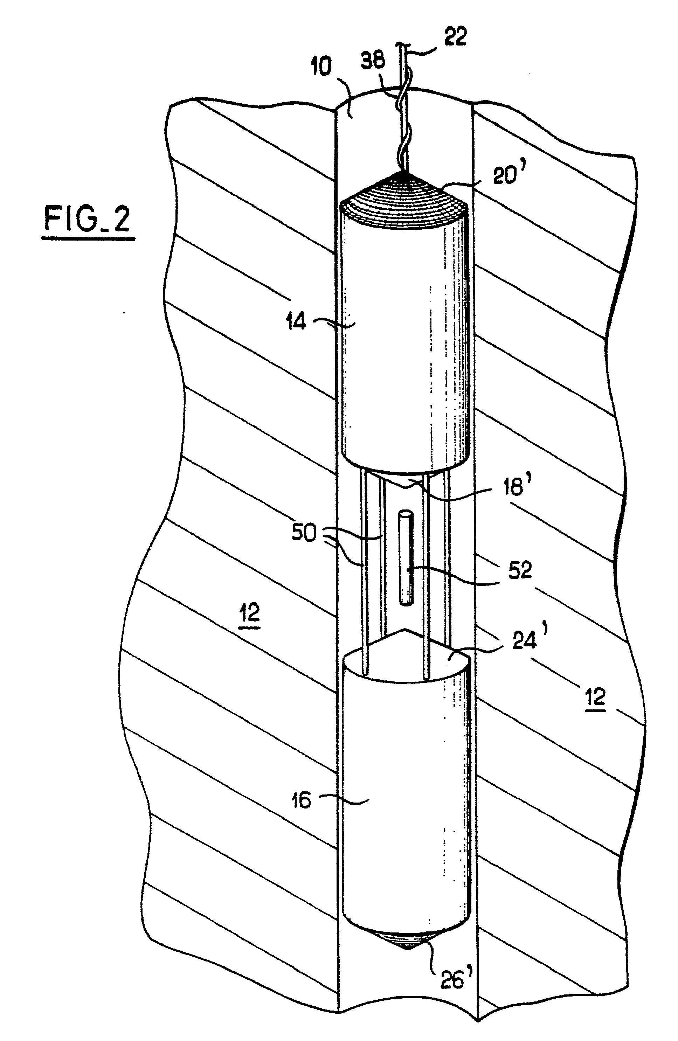

Sur la figure 2 est décrite une variante de réalisation de l'invention. Sur cette figure, des éléments ou parties similaires à ceux de la figure 1 sont désignés par les mêmes numéros de référence.

La structure suspendue de cette variante comprend un cylindre supérieur 14 et un cylindre inférieur 16 qui définissent entre eux un espace fermé 32. Les deux cylindres sont ici reliés entre eux par des barres rigides 50, par exemple en acier.

Comme on peut le voir, les parois supérieure et inférieure de chaque cylindre 14, 16 présentent une forme conique, avec un angle au sommet de l'ordre de 120°.

De la même manière qu'on l'a décrit plus haut, les parois extérieures 20' et 26' des cylindres sont formées de grillage ou d'une structure semblable, tandis que leurs parois intérieures 18, 24, délimitant verticalement l'espace de travail 32, sont pleines et obturent le forage à leur niveau.

Comme dans le mode de réalisation précédent, mais de façon non illustré, les cylindres sont remplis d'une mousse absorbante.

Dans cet exemple de réalisation, la structure suspendue comporte une source sismique schématiquement indiquée en 52, orientée axialement et apte à agir sur 360° en direction radiale. Cette source pourra être choisie parmi un certain nombre de sources possibles indiquées plus loin.

La forme conique des surfaces d'extrémité des cylindres a pour premier objet de faciliter les déplacements verticaux de la structure suspendue dans le forage, en favorisant notamment la circulation de la boue qui y est présente entre lesdits cylindres et les parois du forage.

En outre, cette forme conique a pour but de diminuer l'effort mécanique engendré par l'application de l'onde de choc aux cylindres lors de l'excitation de la source sismique. En effet, l'inclinaison ainsi présentée par les surfaces exposées à l'espace de travail contribue à réfléchir une partie de l'énergie acoustique latéralement, vers la formation géologique avoisinante. En combinaison avec l'effet d'absorption mentionné plus haut procuré par la mousse, on minimise de cette manière la transmission de l'énergie acoustique dans la direction longitudinale du forage.

Par ailleurs, lors de l'emploi d'une source sismique qui met en oeuvre des charges de gaz sous haute pression, la forme conique précitée contribue à faciliter l'évacuation des bulles formées dans la boue vers le haut du forage, cette évacuation étant nécessaire pour l'obtention d'un choc sismique satisfaisant lorsque la source sera par la suite à nouveau excitée.

Il faut noter que l'emploi de barres rigides 50 dans cette forme de réalisation au lieu et place des câbles de suspension 30 de la figure 1 permet avantageusement la mise en oeuvre de sources sismiques par implosion, sans que les deux cylindres tendent à se rapprocher l'un de l'autre d'une manière indésirable sous l'effet de la brusque chute de pression créée par l'excitation de ce type de source.

Bien entendu, la présente invention n'est nullement limitée aux formes de réalisation décrites et représentées, mais inclut dans son cadre toute variante ou modification conforme à son esprit.

En particulier, la partie par laquelle le caisson inférieur est suspendu au caisson supérieur pourra être constituée par tout type de structure aérée, telle que barreaux, câbles, grillage, en tout nombre et densité appropriés.

De plus, on pourra utiliser dans la structure suspendue tout type de source sismique connue, implosive ou explosive, ayant de préférence une orientation axiale et une action sur 360° en direction radiale. On pourra utiliser en particulier un canon à eau ("Watergun"), un canon à rafale de charges explosives, un étinceleur ou encore une source du type à manchon à air dilatable ("Minisleeve"). Les cylindres supérieur et/ou inférieur pourront alors être spécialement aménagés pour recevoir tout ou partie du mécanisme de la source, celle-ci étant bien entendu toujours conçue pour agir dans l'espace 32 entre lesdits cylindres.

L'amortissement de l'énergie acoustique qui tendrait à se propager dans la direction verticale du forage pourra être encore amélioré, en conservant ou non l'amortissement par mousse absorbante décrit plus haut, en donnant aux cylindres supérieur et inférieur une inertie très importante. Ainsi, ils pourront être réalisés au moins en partie en métal massif.

D'une manière générale, on veillera à donner à chacun des deux cylindres une inertie sensiblement identique, pour éviter que l'ensemble de la structure suspendue n'ait tendance à se déplacer vers le haut ou vers le bas lors de l'excitation de la source.

Par ailleurs, la structure pourra être équipée de tout autre dispositif d'amortissement ou d'absorption de l'énergie perdue appliquée sur les extrémités intérieures des deux cylindres.

Par exemple, on pourra prévoir dans la surface externe des cylindres des cannelures verticales ou des rainures hélicoïdales destinées à permettre l'évacuation des bulles d'air créées lors de l'excitation de la source, et ce sans compromettre le couplage avec les parois du forage.

Une autre solution peut consister à prévoir à l'intérieur de chaque cylindre, dans la région de son extrémité tournée vers l'espace de travail, un organe formant clapet qui, par la pression provoquée par l'excitation de la source, s'écarte de son siège pour établir une communication de fluide avec le forage à l'extérieur de la structure, par un passage interne approprié. On prévoira dans ce cas des moyens de rappel, par exemple à ressort, pour ramener le clapet contre son siège.

On réalisera les clapets de préférence en métal, en leur donnant une inertie importante.

De plus, quels que soient les moyens d'absorption prévus, on fera en sorte que les deux cylindres se comportent sensiblement symétriquement lors de l'excitation de la source, afin de limiter la somme algébrique des efforts verticaux appliqués à la structure à une valeur raisonnable.

Enfin, on peut noter que l'amélioration du couplage entre la source sismique et le sous-sol avoisinant permettra d'utiliser des signaux sismiques de formes d'ondes beaucoup plus simples, ce qui est avantageux d'un point de vue autant économique que technique.

## Revendications

1. Structure suspendue pour coupler une source sismique aux parois d'un forage, notamment à des fins de prospection du sous-sol, du type comprenant un élément obturateur supérieur (14) et un élément obturateur inférieur (16) allongés, de dimensions transversales sensiblement égales aux dimensions intérieures du forage (10), définissant entre eux un espace sensiblement fermé (32), des moyens pour relier les éléments obturateurs en établissant une communication entre ledit espace, les parois avoisinantes du forage, et une source sismique (34) apte à agir dans ledit espace, et dans laquelle les éléments obturateurs font obstacle à l'action de la source dans la direction longitudinale du forage pour qu'elle s'exerce essentiellement latéralement contre les parois du forage à la hauteur dudit espace, caractérisée en ce que les moyens de liaison consistent en des éléments de suspension (30; 50) de dimensions transversales réduites, afin de ne pas faire obstacle à l'action latérale de la source.

2. Structure selon la revendication 1, caractérisée en ce que les éléments obturateurs (14, 16) sont des cylindres creux remplis au moins partiellement d'une mousse absorbante et fermés à leur extrémité tournée vers ledit espace (32).

3. Structure selon la revendication 1, caractérisée en ce que les éléments obturateurs sont des cylindres métalliques massifs.

4. Structure selon l'une quelconque des revendications 1 à 3, caractérisée en ce que les éléments obturateurs (14, 16) présentent des faces d'extrémité coniques.

5. Structure selon l'une quelconque des revendications 1 à 4, caractérisée en ce que chaque élément obturateur comprend, à son extrémité tournée vers ledit espace, un moyen formant clapet établissant une communication de fluide avec le forage à l'extérieur de la structure lorsque la source sismique est excitée.

6. Structure selon l'une quelconque des revendications 1 à 5, caractérisée en ce que chaque élément obturateur présente à sa surface externe des creusements formant passage de fluide entre ledit élément et les parois du forage.

7. Structure selon l'une quelconque des revendications 1 à 6, caractérisée en ce que les éléments de suspension comprennent des câbles (30).

8. Structure selon l'une quelconque des revendications 1 à 6, caractérisée en ce que les éléments de suspension comprennent des barreaux (50).

9. Structure selon l'une quelconque des revendications 1 à 8, caractérisée en ce que la source sismique (34, 52) est choisie dans le groupe comprenant : les matières explosives, les sources implosives, les canons à eau, les manchons dilatables, les étinceleurs.

10. Procédé de prospection sismique du sous-sol, caractérisé en ce qu'on dispose dans au moins un forage au moins une structure suspendue selon l'une quelconque des revendications précédentes, on excite la source sismique de ladite structure, et on capte les signaux sismiques engendrés dans le sous-sol par ladite source.

## Patentansprüche

1. Aufhängungsanordnung zur Kopplung einer seismischen Quelle an die Wände eines Bohrlochs, insbesondere an die Enden einer Untergrund-Schürfbohrung, welche aufweist: ein oberes, längliches Schieberelement (14) und ein unteres, längliches Schieberelement (16), deren Querschnittabmessungen annähernd den Innenabmessungen des Bohrlochs (10) gleich sind und die zwischen einander einen annähernd geschlossenen Raum (32) definieren, ferner Mittel zum Verbinden der Schieberelemente unter Einrichtung einer Verbindung zwischen dem genannten Raum, den benachbarten Wänden des Bohrlochs und einer seismischen Quelle (34), welche in dem Raum zu wirken vermag, in welcher die Schieberelemente ein Hindernis für die Wirkung der Quelle in Längsrichtung des Bohrlochs bilden, damit sie im wesentlichen seitlich gegen die Wände des Bohrlochs in Höhe des Raumes zur Wirkung gelangt, dadurch gekennzeichnet, daß die Verbindungsmittel aus Aufhängeelementen (30; 50) mit in Querrichtung verminderten Abmessungen bestehen, um kein Hindernis für die Seitenwirkung der Quelle zu bilden.

2. Anordnung nach Anspruch 1, dadurch gekennzeichnet, daß die Schieberelemente (14, 16) Hohlzylinder sind, welche mindestens teilweise mit einem absorbierenden Schaum gefüllt sind und welche an ihrem zu den genannten Raum (32) gewandten Ende geschlossen sind.

3. Anordnung nach Anspruch 1, dadurch gekennzeichnet, daß die Schieberelemente massive Metallzylinder sind.

4. Anordnung nach einem der Ansprüche 1 bis 3, dadurch gekennzeichnet, daß die Schieberelemente (14, 16) konische Endseiten aufweisen.

5. Anordnung nach einem der Ansprüche 1 bis 4, dadurch gekennzeichnet, daß jedes Schieberelement an seinem zu dem genannten Raum gewandten Ende eine Einrichtung aufweist, welche eine Klappe bildet, die eine Fluidverbindung mit dem Bohrloch außerhalb der Anordnung bildet, wenn die seismische Quelle erregt wird.

6. Anordnung nach einem der Ansprüche 1 bis 5, dadurch gekennzeichnet, daß jedes Schieberelement an seiner Außenoberfläche Vertiefungen aufweist, welche einen Fluiddurchgang zwischen dem Element und den Wänden des Bohrlochs bilden.

7. Anordnung nach einem der Ansprüche 1 bis 6, dadurch gekennzeichnet, daß die Aufhängeelemente Kabel (30) umfassen.

8. Anordnung nach einem der Ansprüche 1 bis 6, dadurch gekennzeichnet, daß die Aufhängeelemente Stäbe (50) umfassen.

9. Anordnung nach einem der Ansprüche 1 bis 8, dadurch gekennzeichnet, daß die seismische Quelle (34, 52) aus der Gruppe gewählt ist, welche umfaßt: Explosivstoffe, Implosivquellen, Wasserkanonen, Dehnungsmuffen und Sprüheinrichtungen.

10. Verfahren zur seismischen Prospektion des Untergrundes, dadurch gekennzeichnet, daß man in mindestens einem Bohrloch mindestens eine Aufhängeanordnung nach einem der vorangehenden Ansprüche anbringt, daß man die seismische Quelle dieser Struktur erregt und daß man die seismischen Signale auffängt, welche im Untergrund durch die genannte Quelle erzeugt wurden.

## Revendications

1. A suspended structure for coupling a seismic source to the walls of a borehole, in particular for underground prospecting purposes, of the type comprising top (14) and bottom (16) elongate plug elements, having transverse dimensions substantially equal to the inside dimensions of the borehole (10), defining therebetween a substantially closed space (32), means for connecting the plug elements while establishing a communication between said space, the surrounding walls of the borehole, and a seismic source (34) suitable for acting in said space, and wherein the plug elements oppose the action of the source in the longitudinal direction of the borehole so that it is applied essentially sideways against the walls of the borehole level with said space, characterized in that the connecting means are comprised of suspension elements (30; 50) having small transverse dimensions, so as not to oppose the action of the source sideways.

2. A structure according to claim 1, characterized in that the plug elements (14, 16) are hollow cylinders at least partially filled with an absorbent foam and closed at their ends facing said space (32).

3. A structure according to claim 1, characterized in that the plug elements are solid metal cylinders.

4. A structure according to anyone of claims 1-3, characterized in that the plug elements (14, 16) have conical end faces.

5. A structure according to anyone of claims 1-4, characterized in that each plug element includes a valve means at its end facing said space, said valve means establishing fluid communication with the borehole outside the structure when the seismic source is excited.

6. A structure according to anyone of claims 1-5, characterized in that each plug element has recesses in its outside surface forming fluid passages between said element and the walls of the borehole.

7. A structure according to anyone of claims 1-6, characterized in that the suspension elements comprise cables (30).

8. A structure according to anyone of claims 1-6, characterized in that the suspension elements comprise bars (50).

9. A structure according to anyone of claims 1-8, characterized in that the seismic source (34, 52) is selected from the group constituted by : explosive materials, implosive sources, water guns, dilatable sleeves, and sparkers.

10. A method of underground seismic prospecting characterized in that at least one suspended structure according to anyone of the preceding claims is disposed in at least one borehole, the seismic source of said structure is excited, and seismic signals generated in underground by said source are picked up.

FIG_1

FIG_2